Europäisches Patentamt

European Patent Office

Office européen des brevets

(11) Numéro de publication: **0 218 527**
**B1**

(12) **FASCICULE DE BREVET EUROPEEN**

(45) Date de publication du fascicule du brevet: **07.11.90**

(21) Numéro de dépôt: **86402136.5**

(22) Date de dépôt: **30.09.86**

(51) Int. Cl.⁵: **G 05 B 19/04**

(54) **Dispositif de séquencement notamment pour circuits logiques.**

(30) Priorité: **01.10.85 FR 8514531**

(43) Date de publication de la demande:
**15.04.87 Bulletin 87/16**

(45) Mention de la délivrance du brevet:
**07.11.90 Bulletin 90/45**

(84) Etats contractants désignés:
**DE GB NL SE**

(56) Documents cités:
**FR-A-2 126 057**
**US-A-3 634 769**

(73) Titulaire: **Kalfon, René**
**816, rue de la Haie**
**F-76230 Bois Guillaume (FR)**

(72) Inventeur: **Kalfon, René**
**816, rue de la Haie**
**F-76230 Bois Guillaume (FR)**

(74) Mandataire: **Martinet & Lapoux**
**62, rue des Mathurins**
**F-75008 Paris (FR)**

## Description

La présente invention concerne un dispositif de séquencement et plus particulièrement un séquenceur ayant plusieurs cellules pour commander des séquences d'un cycle en réponse à des ordres de déclenchement appliquées à des entrées des cellules. En général, un tel dispositif de séquencement est utilisable pour programmer selon un order prédéterminé et en fonction de paramètres et critères internes et/ou externes à un système automatique, des opérations effectuées par des circuits logiques, électroniques, ou électromécaniques.

Actuellement, un tel séquenceur est bien souvent réalisé par au moins un microprocesseur dans lequel est écrit une programmation correspondant au déroulement d'un cycle de séquences répétitif. Cependant, un tel microprocesseur offre l'inconvénient que le temps s'écoulant entre la réception d'un ordre de déclenchement d'une séquence et le début effectif de la séquence est relativement élevé. Ceci constitue une entrave importante dans le cadre d'opérations à déroulement rapide dont certaines, effectuées par des circuits logiques, doivent être accomplies pendant des durées inférieures à une microseconde, tandis que le retard apporté par le microprocesseur pour déclencher la séquence est de l'ordre de plusieurs microsecondes.

Ce type de séquenceur peut être réalisé également par la combinaison de cellules logiques élémentaires décrites dans la FR—A—2126057. Chacune des cellules dans ce séquenceur comporte des moyens logiques pour enregistrer une commande de déclenchement respective de ladite cellule, généralement jusqu'à la fin du cyle du séquenceur, et des moyens logiques pour élaborer un ordre de début de la séquence respective afin de le présenter à une sortie de la cellule et d'arrêter la séquence immédiatement antérieure du cycle, en réponse à la commande de déclenchement enregistrée. Un signal de fin de cycle remet à zéro, c'est-à-dire réinitialise toutes les cellules.

Dans ce type de cellule connue, les moyens logiques et particulièrement ceux pour enregistrer la commande de déclenchement incluent de nombreuses portes logiques. Les temps de transit à travers ces portes retardent le déclenchement d'une séquence. Ceci est d'autant plus accentué que l'ordre de déclenchement qui est destiné à activer des organes électromagnétiques ou une cellule suivante, n'est enregistré qu'après le transit de l'ordre de déclenchement à travers l'ensemble des portes logiques contenues dans les deux moyens logiques connectés en cascade dans la cellule.

La présente invention a donc pour but de fournir un dispositif de séquencement comprenant des cellules logiques moins complexes et onéreuses et offrant un temps d'intervention dans chaque séquence à déclencher nettement inférieure à celui d'une cellule selon la technique antérieure, typiquement inférieur à la microseconde, et de préférence égal à environ 40 ns.

A cette fin, un dispositif de séquencement est tel que défini dans la revendication 1.

Un séquenceur selon l'invention assure, dans un cycle d'opérations complexes comprenant un très grand nombre de séquences, les fonctions principales suivantes:

—mémorisation du déclenchement de toutes les séquences qui ont été effectuées depuis le début du cycle, même si des séquences ont été sautées;

—déclenchement de manière systématique ou conditionnelle ou sélective du début d'une séquence de rang chronologique supérieur dans le cadre d'un programme établi correspondant au cycle des opérations;

—identification de la séquence en cours de déroulement de préférence au moyen d'une mémoire morte respective contenant un mot représentatif de la séquence et lue en réponse à l'enregistrement de l'ordre de déclenchement de la séquence.

Le dispositif de séquencement est utilisable dans la conception et l'architecture de systèmes électroniques mettant en oeuvre conjointement ou séparément des circuits logiques TTL, des circuits électromécaniques, des microprocesseurs et leurs périphériques et tous autres dispositifs ou automates participant à des opérations complexes pouvant comprendre un nombre illimité de séquences. Ces séquences peuvent être soit aléatoires lorsqu'elles dépendent d'évènements extérieurs, soit chroniques lorsqu'elles dépendent de l'achèvement de la séquence qui les précède, soit enfin liées à une temporisation.

Le dispositif de séquencement n'a pas d'horloge et sa progression dépend uniquement de la durée de chaque séquence. La progression d'un cycle dans le dispositif est ainsi indépendante de toute horloge. Dans le cas d'opérations ne faisant intervenir que des circuits logiques TTL non soumis à des aléas, la durée d'une séquence est égale à la somme des durées des opérations des circuits logiques effectuant la séquence augmentée de 40 ns environ correspondant au temps d'opération du dispositif pour une séquence.

Par rapport à un microprocesseur, le dispositif de séquencement a un comportement plus passif dans la mesure où il coordonne des opérations mais n'intervient pas dans leur déroulement. Sa programmation est câblée et non "écrite". En revanche, son temps d'intervention par instruction ou séquence est très rapide. C'est pourquoi, l'emploi du dispositif est préconisé dans le cadre d'opérations à déroulement rapide.

Les séquences qui composent un cycle déterminé d'opérations sont nécessairement classées chronologiquement selon un ordre qui reste le même chaque fois que le cycle est répété. Cet ordre chronologique constitue le programme du dispositif de séquencement. Cette caractéristique concerne le cas très courant de procédures préétablies et répétitives dans la plupart des systèmes électroniques. Le dispositif selon l'invention est utilisable tout particulièrement pour l'établissement et la gestion d'une communication téléphonique dans un commutateur, ou pour la gestion et l'organisation d'échanges de signalisations entre centraux téléphoniques. Le dispositif de séquencement peut faire choix entre plusieurs procédures dans le cas d'un commutateur RNIS—Réseau Numérique à Intégration de Services—ayant des moyens d'entrées banalisées gérant indifféremment, après l'avoir identifiée, une communication téléphonique ou télégraphique, ou télématique, ou vidéo, chacune relevant de procédures distinctes.

Pour cela, selon l'invention, un premier séquenceur dit principal est assisté de seconds séquenceurs dits auxiliaires cablés selon des procédures ou sous-programmes qu'ils contrôlent. Les seconds séquenceurs ont des structures analogues à celle du premier séquenceur. Le premier séquenceur dans ce cas sélectionne et active au moins un second séquenceur correspondant à la procédure choisie et détecte la fin de cycle du second séquenceur activé.

Certaines séquences du premier séquenceur et des seconds séquenceurs peuvent correspondre au cycle d'un microprocesseur. Comme on le verra dans la suite, un dispositif de séquencement peut comprendre plusieurs séquenceurs interconnectés en série, et/ou plusieurs séquenceurs interconnectés en parallèle afin de réaliser toutes sortes d'interconnexion entre séquenceurs.

Ainsi, un dispositif de séquencement selon l'invention offre quatre performances particulièrement intéressantes:

—une très grande vitesse;

—une compatibilité avec toutes les technologies utilisées en électronique, à courants forts ou à courants faibles;

—une facilité de réaliser par son intermédiaire des systèmes interactifs à distance;

—une programmation modulaire et extensible par assemblage de plusieurs séquenceurs.

D'autres caractéristiques et avantages de la présente invention apparaîtront plus clairement à la lecture de la description suivante de plusieurs réalisations préférées de l'invention en référence aux dessins annexés correspondants dans lesquels:

—la Fig. 1 montre en détail un premier séquenceur selon l'invention;

—la Fig. 2 est un bloc-diagramme d'un dispositif de séquencement comprenant trois séquenceurs interconnectés en série;

—la Fig. 3 est un bloc-diagramme d'un dispositif de séquencement comprenant un séquenceur principal sélectionnant trois séquenceurs "en parallèle"; et

—la Fig. 4 est un bloc-diagramme d'un dispositif de séquencement comprenant un séquenceur principal et un séquenceur auxiliaire sélectionné plusieurs fois par le séquenceur principal.

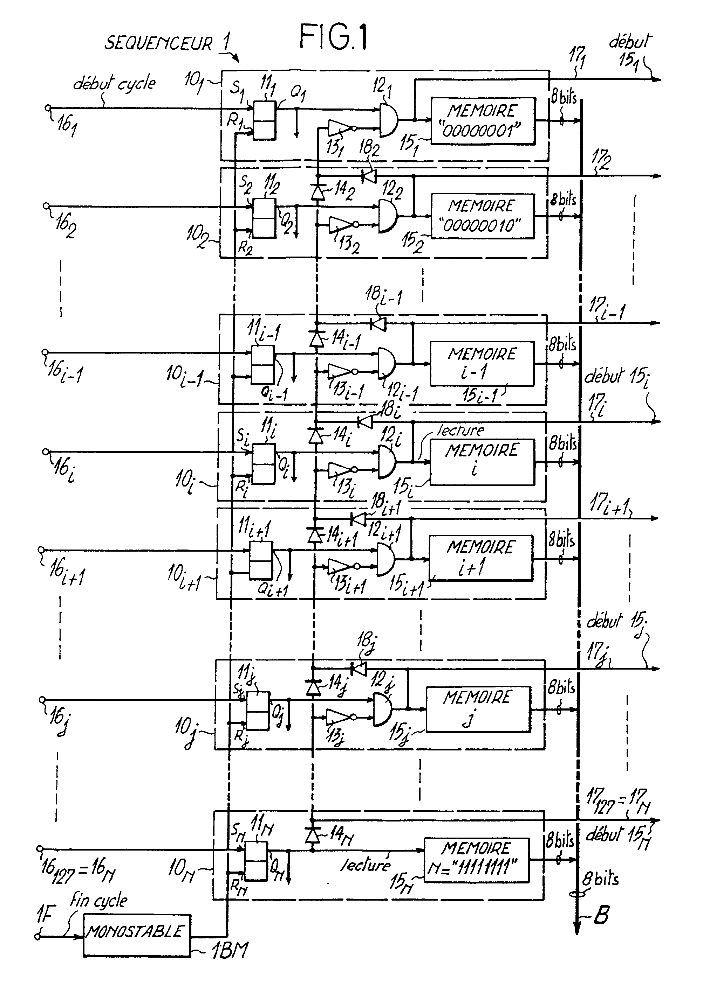

En référence à la Fig. 1, un séquenceur 1 selon l'invention est composé de N cellules élémentaires logiques $10_1$ à $10_N$ propres à déclencher l'une après l'autre des séquences respectives $1S_1$ à $1S_N$ d'un cycle d'opérations. L'entier N peut être choisi selon les besoins aussi grand que désiré. Selon la Fig. 1, le séquenceur comprend 127

cellules $10_1$ à $10_{127}$. Toutes les cellules sont identiques à l'exception de la première $10_1$ et de la dernière $10_N$.

Chacune des cellules identiques $10_2$ à $10_{N-1}$, telle que la cellule $10_i$ de rang i montrée à la Fig. 1, comprend une bascule bistable $11_i$ du type RS, une porte ET à deux entrées $12_i$, un inverseur $13_i$, une première diode $14_i$, une mémoire morte à 8 bits du type ROM ou du type câblée $15_i$, et une seconde diode $18_i$.

Une entrée de mise à un $S_i$ de la bascule $11_i$ reçoit par une borne d'entrée $16_i$ de la cellule $10_i$ un signal de déclenchement ayant une transition montante, "0" à "1", caractérisant un ordre de déclenchement de la séquence respective $1S_i$ accomplie par un circuit électronique ou électromécanique correspondant. En général, le séquenceur pilote un système constitué par un assemblage hétérogène de structures associées respectivement aux séquences, telles que circuit logiques TTL, circuit électromécaniques à courants faibles ou forts, processeurs, microprocesseurs, automates, etc... Cet order de déclenchement peut être prélevé en un point significatif d'un circuit logique quelconque ou bien en sortie d'un circuit logique de détection, tel qu'un circuit de génération d'impulsion ou un décodeur d'adresse, inclus dans une structure. Cet order de déclenchement est enregistré dans la bascule $11_i$ jusqu'à la fin d'un cycle du séquenceur et est traduit par un "1" à une sortie $Q_i$ de la bascule $11_i$.

La sortie $Q_i$ constitue une sortie de la cellule $10_i$ pour indiquer, après passage de celle-ci à l'état logique "1" et jusqu'à l'achèvement d'un cycle du séquenceur, que la séquence $1S_i$ est déclenchée. Comme on le verra dans la suite, dans le cas où toutes les séquences ordonnées $1S_1$ à $1S_N$ du séquenceur sont effectuées systématiquement, l'information donnée par la sortie $Q_i$ est inutile, car le déclenchement de la séquence $1S_i$ suppose nécessairement que toutes les séquences $1S_1$ à $1S_{i-1}$ qui précèdent se sont déjà toutes déroulées. Par contre, lorsque le cycle comporte des sauts de séquences ou une sélection de sous-séquences, matérialisés par des séquenceurs auxiliaires, l'information portée par la sortie $Q_i$ et relative aux séquences sautées ou aux sous-séquences choisies, peut être exploitée comme une donnée par des circuits logiques et conduire à certaines décisions ou certains choix. Elle intervient alors comme un facteur de programmation.

Toutes les bascules $11_1$ à $11_N$ dans les cellules offrent des entrées de remise à zéro $R_1$ à $R_N$ qui sont reliées à une sortie d'une bascule monostable 1BM. En réponse à un signal logique, tel qu'un front montant, appliqué à une entrée 1F de la bascule 1RM et indiquant la fin d'un cycle, la sortie de la bascule 1BM produit une impulsion calibrée pour effacer la mémorisation des ordres de déclenchement dans toutes les bascules $11_1$ à $11_N$ et ainsi remettre à "0" les sorties $Q_1$ à $Q_N$ et réinitialiser les bascules $11_1$ à $11_N$.

Toujours en référence à la cellule $10_i$, la porte $12_i$ a une sortie $17_i$ qui est reliée à une entrée de commande en lecture de la mémoire associée $15_i$

et à une anode de la diode $18_i$ et qui constitue une borne de sortie de la cellule $10_i$ pour indiquer, à l'état "1", le déroulement de la séquence en cours $1S_i$. La porte $12_i$ offre une première entrée reliée directement à la sortie $Q_i$ et une seconde entrée reliée, à travers l'inverseur $13_i$, à une anode de la diode $14_i$ et aux cathodes des diodes $14_{i+1}$ et $18_{i+1}$ dans la cellule $10_{i+1}$ de rang immédiatement supérieur $i+1$. La sortie $17_i$ est ainsi à l'état "1" lorsque la sortie $Q_i$ est à "1" et aucune des cellules suivantes $10_{i+1}$ à $10_N$ n'a été antérieurement déclenchée, ceci se traduisant par l'état "0" aux sorties $17_{i+1}$ à $17_N$. Cette dernière condition est imposée par une chaîne de verrouillage constituée par les diodes $14_{i+1}$ à $14_N$ ayant leurs cathodes à l'état "0". Par contre, dès que l'une, $10_j$, des cellules de rang supérieur $10_{i+1}$ à $10_N$ est déclenchée, la sortie de la bascule bistable $11_j$ dans la cellule déclenchée $10_j$ passe à "1" et ouvre la porte ET associée $12_j$ pour fermer notamment la porte $12_i$. La durée de la séquence $1S_i$ est ainsi comprise entre l'instant où la borne $16_i$ est marquée par l'ordre de déclenchement de la séquence $1S_i$ et l'instant où la borne $16_j$ d'une cellule $10_j$ de rang supérieur $j$ tel $i<j=<N$ est marquée chronologiquement immédiatement après la borne $17_i$ de la cellule $10_i$. Lorsque le cycle de séquences comprend un saut de séquences, $j$ est différent de $i+1$. Ainsi, le séquenceur 1 permet des sauts de séquences mais n'autorise pas de retour en arrière et de reprises de séquences antérieures lorsqu'il est utilisé seul, puisque l'état "1" appliqué à l'entrée de l'inverseur $13_i$, ainsi qu'aux entrées des inverseurs $13_{i-1}$ à $13_1$ dans les cellules de rang inférieur, ferment définitivement les portes ET $12_i$ à $12_1$ en réponse au déclenchement de l'une des cellules $10_{i+1}$ à $10_N$, quels que soient les états des bornes d'entrée $16_{i+1}$ à $16_1$. Comme on le verra dans la suite, des reprises ou répétitions de séquences sont possibles en utilisant des séquenceurs auxiliaires interconnectés au séquenceur principal 1.

La mémoire morte $15_i$ contient un mot représentant en code binaire le rang $i$ de la cellule $10_i$ qui est lu et transmis dans un bus à huit fils B commun à toutes les sorties des mémoires $15_1$ à $15_N$, en réponse à l'ouverture de la porte ET $12_i$ au début de la séquence $1S_i$. Le rang $i$ transmis constitue une information binaire pouvant avantageusement activer directement un microprocesseur, ou être codée selon un code en ligne connu pour être transmise à un autre séquenceur distant qui pilote un autre ensemble de circuits logiques ou analogues. Cette disposition permet un échange interactif d'ordres entre séquenceurs inclus dans des systèmes éloignés. A titre d'exemple, ce cas peut être appliqué aux procédures d'échange de signalisations entre équipements de raccordement d'abonné de commutateurs téléphoniques et, d'une manière plus générale, à tout système mettant en oeuvre des procédures de type interactif ou conversationnel.

Comme déjà dit et montré à la Fig. 1, la première cellule $10_1$ et la dernière cellule $10_N$ diffèrent sensiblement de la cellule $10_i$ décrite ci-

dessus. La première cellule $10_1$ comprend une bascule bistable $11_1$, une porte ET à deux entrées $12_1$, un inverseur $13_1$ et une mémoire morte $15_1$ interconnectés d'une manière identique aux composants correspondants $11_i$, $12_i$, $13_i$ et $15_i$ dans la cellule $10_i$, et ne comporte pas de diode. La dernière cellule $10_N$ comprend une bascule bistable $10_N$, une seule diode $14_N$ et une mémoire morte $15_N$ et ne comporte pas de porte ET, d'inverseur et de seconde diode; la sortie $Q_N$ de la bascule $10_N$ est reliée directement à l'entrée de commande de lecture de la mémoire $15_N$ et à l'anode de la diode $14_N$, et la cathode de la diode $14_N$ constitue seule la borne de sortie de début de séquence $17_N$ de la cellule $10_N$ reliée à l'anode de la diode $14_{N-1}$ dans la cellule précédente $10_{N-1}$.

A titre d'exemple, est indiquée ci-après la performance moyenne évaluée du séquenceur 1 pilotant un cycle comprenant 127 instructions ou séquences. Chaque séquence est réalisée par un circuit opératoire TTL ayant une durée moyenne d'opération de l'ordre de 200 ns. En outre, il est supposé qu'aucun évènement extérieur de durée aléatoire n'intervient dans le déroulement de la séquence considérée. Le déclenchement d'une séquence à travers une cellule du séquenceur est de l'ordre de 40 ns. Selon cet exemple, la durée totale du cycle des 127 séquences est de 30,4 µs dont 25,4 µs pour les fonctionnements cumulés des circuits opératoires TTL et 5 µs pour celui du séquenceur 1.

Comparativement à la technique antérieure selon laquelle un microprocesseur commande un cycle de 127 instructions réduites au minimum, soit 1 octet, et 3 µs environ par instruction, la durée totale du cycle atteint 406,4 µs, dont 25,4 µs pour les fonctionnements cumulés de tous les circuits opératoires TTL. Dans tous les cas où le séquenceur peut être substitué à un microprocesseur, la vitesse des opérations réalisées est au moins 10 fois plus grande pour les plus mauvaises hypothèses. Dans le cas du séquenceur, le rapport des durées de cycle séquenceur/circuits opératoires est de 5/25,4=0,20 tandis que, toutes choses égales par ailleurs et dans le meilleur des cas, pour un microprocesseur, le rapport correspondant est de 381/25,4=15.

Le séquenceur 1 décrit ci-dessus, appelé séquenceur principal, peut être assisté d'un ou de plusieurs séquenceurs auxiliaires pour constituer divers dispositifs de séquencement permettant de contrôler des sous-séquences composant une ou plusieurs séquences déclenchées par le séquenceur principal. A titre d'exemple non limitatif, trois exemples de dispositifs de séquencement sont décrits ci-après. Dans la suite, chaque séquenceur auxiliaire est désigné par le chiffre 2 accompagnés d'un indice correspondant généralement à l'indice de la cellule du séquenceur principal ou auxiliaire qui déclenche le cycle de sous-séquences accompli par ledit séquenceur auxiliaire. Les composants, les entrées et les sorties de chaque séquenceur auxiliaire sont désignés par des repères analogues à ceux du séquenceur principal, en remplaçant le chiffre des dizaines 1 par 2, et accompagnés par l'indice du séquenceur auxiliaire.

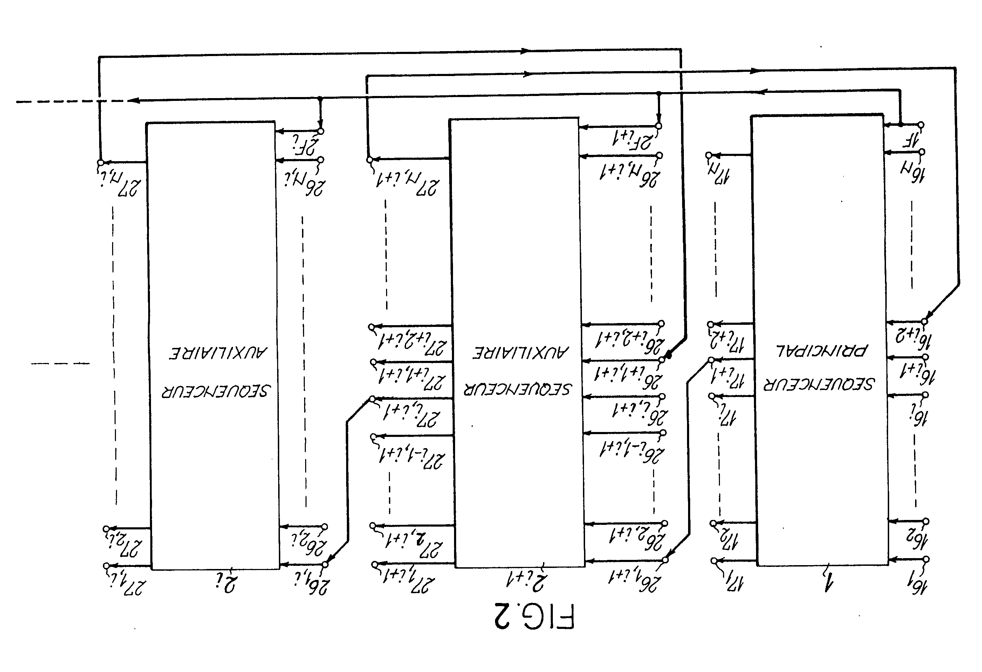

En référence à la Fig. 2, le séquenceur principal 1 et au moins deux séquenceurs auxiliaires $2_{i+1}$ et $2_i$ sont disposés en cascade ou dit également en série. Selon la réalisation illustrée à la Fig. 2, la borne de sortie $17_{i+1}$ du séquenceur principal 1 est reliée à la première borne d'entrée $26_{1,i+1}$ du premier séquenceur auxiliaire $2_{i+1}$, et la borne de sortie $27_{i,i+1}$ du séquenceur $2_{i+1}$ est reliée à la première borne d'entrée $26_{1,i}$ du second séquenceur auxiliaire $2_i$. La borne de sortie $26_{N,i}$ de la dernière cellule du séquenceur $2_i$ est reliée à une borne d'entrée, telle que la borne $26_{i+1,i+1}$, du séquenceur $2_{i+1}$ ayant un rang supérieur à celui de la borne de sortie $27_{i,i+1}$, et la borne de sortie $27_{N,i+1}$ de la dernière cellule du séquenceur $2_{i+1}$ est reliée à une borne d'entrée, telle que la borne $16_{i+2}$, du séquenceur principal 1 ayant un rang supérieur à celui de la borne de sortie $17_{i+1}$. Un cycle du dispositif de séquencement montré à la Fig. 2 est alors composé des i premières séquences du séquenceur 1, des i−1 premières séquences du séquenceur $2_{i+1}$, de toutes les séquences du séquenceur $2_i$, des N−i dernières séquences du séquenceur $2_{i+1}$, et des N−(i+1) dernières séquences du séquenceur 1. Toutes les entrées de fin de cycle $2F_{i+1}$, $2F_i$ des séquenceurs auxiliaires $2_{i+1}$, $2_i$ sont reliées à l'entrée 1F du séquenceur principal 1 afin que toutes les bascules RS dans les séquenceurs soient remises à zéro simultanément à la fin du cycle du séquenceur principal.

Dans cet assemblage en série de séquenceurs, le séquenceur principal 1 conserve le contrôle de tout le cycle d'opérations à effectuer, et les séquenceurs auxiliaires n'interviennent que pour le déroulement de sous-programmes annexes, ou optionnels, ou sélectifs, ou conditionnels. Ces sous-programmes sont déclenchés par un ordre appliqué à la borne d'entrée $16_{i+1}$ du séquenceur principal et s'achèvent par le marquage de la borne d'entrée $16_{i+2}$ du séquenceur principal déclenchant ainsi la poursuite du cycle principal. Un séquenceur principal ou auxiliaire peut desservir un ou plusieurs séquenceurs auxiliaires interconnectés chacun entre une borne de sortie de range donné et une borne d'entrée de rang au moins immédiatement supérieur, ce qui permet de réaliser une ramification de séquences en arbre aussi developpée que désirée en fonction de la programmation recherchée.

L'assemblage en série permet d'insérer ou de sauter des sous-séquences déclenchées par un séquenceur, tel que le séquenceur $2_{1+1}$ interconnecté à un séquenceur suivant, tel que le séquenceur $2_i$. Pour cela, la borne de sortie $27_{i-1,i+1}$ active un circuit logique qui, en fonction de paramètres, décide de marquer la borne d'entrée $26_{i,i+1}$ pour déclencher le cycle du séquenceur $2_i$ ou de marquer la borne d'entrée suivante $26_{i+1,i+1}$ pour sauter le cycle du séquenceur $2_i$.

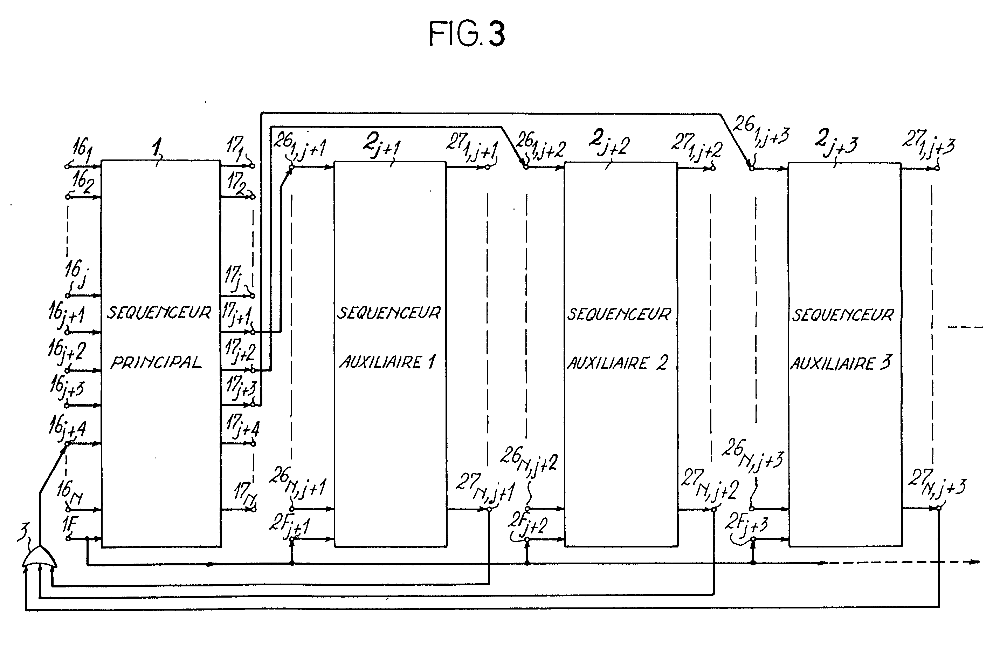

En référence à la Fig. 3, le séquenceur principal 1 et trois séquenceurs auxiliaires $2_{j+1}$, $2_{j+2}$ et $2_{j+3}$ sont interconnectés selon une ramification dite en parallèle. Des premières bornes d'entrée $26_{1,j+1}$, $26_{1,j+2}$ et $26_{1,j+3}$ des séquenceurs $2_{j+1}$, $2_{j+2}$ et $2_{j+3}$ sont respectivement reliées à des bornes de sortie $17_{j+1}$, $17_{j+2}$ et $17_{j+3}$ du séquenceur 1. Des dernières bornes de sortie $27_{N,j+1}$, $27_{N,j+2}$ et $27_{N,j+3}$ des séquenceurs $2_{j+1}$, $2_{j+2}$ et $2_{j+3}$ sont reliées à la borne d'entrée $16_{j+4}$ du séquenceur principal 1 à travers une porte OU à trois entrées 3. La borne d'entrée de fin de cycle 1F du séquenceur principal 1 est reliée à toutes les bornes d'entrée de fin de cycle $2F_{j+1}$, $2F_{j+2}$ et $2F_{j+3}$ des séquenceurs auxiliaires $2_{j+1}$, $2_{j+2}$ et $2_{j+3}$. Un cycle du dispositif de séquencement montré à la Fig. 3 est alors composé des premières séquences $1S_1$ à $1S_j$ du séquenceur 1, d'une sélection de l'une des séquences $1S_{j+1}$ à $1S_{j+3}$ au moyen d'un sélecteur inclus dans le circuit opératoire relié à la borne de sortie $17_j$ qui sélectionne l'une des bornes d'entrée $16_{j+1}$, $16_{j+2}$, et $16_{j+3}$ en fonction de paramètres analysés pendant la séquence $1S_j$, de la séquence sélectionnée $1S_{j+1}$ ou $1S_{j+2}$ ou $1S_{j+3}$ qui est composé de N sous-séquences déclenchées par le séquenceur auxiliaire sélectionné $2_{j+1}$ ou $2_{j+2}$ ou $2_{j+3}$, et enfin des séquences $1S_{j+4}$ à $1S_N$ du séquenceur principal 1.

Par exemple, lorsque la séquence $S_{j+2}$ est sélectionnée, les séquences $S_{j+1}$ et $S_{j+3}$ sont sautées. L'assemblage en parallèle de séquenceurs permet de réaliser des sous-programmes sélectionnés en fonction de facteurs extérieurs.

Les assemblages en série et en parallèle tels que montrés aux Fig. 2 et 3 sont également combinables au niveau de n'importe quel séquenceur, principal ou auxiliaire.

En particulier, un séquenceur principal 1 et un séquenceur auxiliaires $2_{ij}$ peuvent être interconnectés de manière à répéter un cycle de sous-séquences prédéterminées et ainsi autoriser des répétitions ou "retours en arrière" de programme, ceux-ci ne pouvant être réalisés au moyen du seul séquenceur principal 1, comme déjà dit. En particulier, la présence d'une seconde diode $18_2$ à $18_{N-1}$ permet d'éviter l'activation de la mémoire morte $15_2$ à $15_{N-1}$ et de la borne de sortie $17_1$ à $17_{N-1}$ associées lorsque la diode correspondante $14_2$ à $14_{N-1}$ est conductrice.

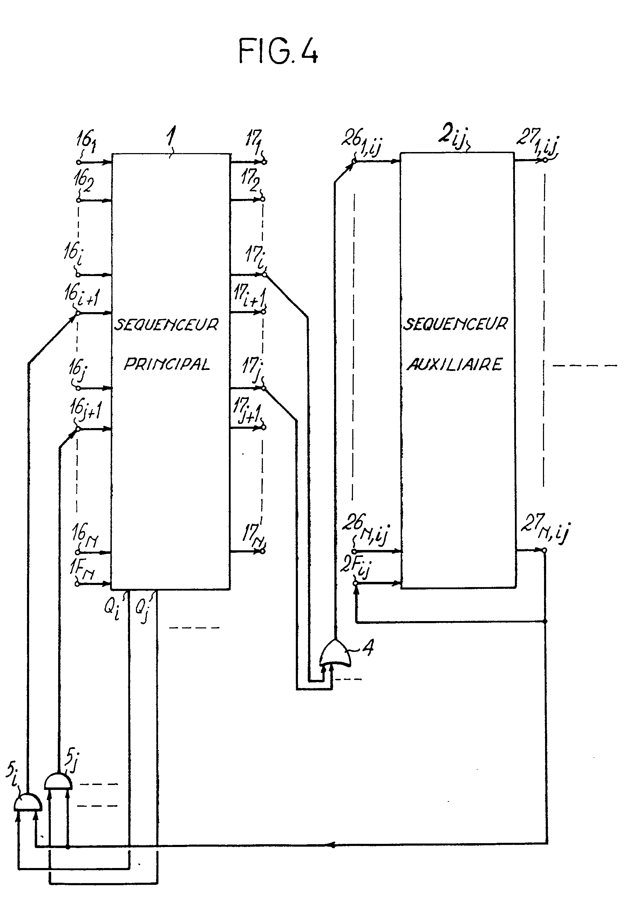

La Fig. 4 illustre un dispositif de séquencement ayant deux séquenceurs 1 et $2_{ij}$ permettant au moins deux répétitions du cycle de sous-séquences commandées par le séquenceur auxiliaire $2_{ij}$. Au moins deux bornes de sortie $17_i$ et $17_j$ du séquenceur principal, telles que l'indice j est supérieur à l'indice i, sont reliées à la première borne d'entrée $26_{1,ij}$ du séquenceur $2_{ij}$ à travers une porte OU 4 ayant au moins deux entrées. La dernière borne de sortie $27_{N,ij}$ du séquenceur $2_{ij}$ est reliée à sa propre borne d'entrée de fin de cycle de sous-séquences $2F_{ij}$ afin d'effacer les ordres de déclenchement des sous-séquences et permettre une répétition ultérieure de celles-ci pendant le cycle du séquenceur principal, et est également reliée à des premières entrées d'au moins deux portes ET $5_i$ et $5_j$ ayant des secondes entrées respectivement reliées aux bornes $Q_i$ et $Q_j$ du séquenceur 1. Des sorties des portes $5_i$ et $5_j$

sont reliées respectivement aux bornes d'entrée $16_{i+1}$ et $16_{j+1}$ du séquenceur 1. Le déroulement du cycle du séquenceur 1 est alors composé des séquences $1S_1$ à $1S_N$ parmi lesquelles les séquences $1S_i$ et $1S_j$ sont composées d'un cycle entier des sous-séquences commandées par le séquenceur auxiliaire $2_{ij}$. Une fin de cycle du séquenceur auxiliaire $2_{ij}$ indiquée par l'état "1" à la borne $27_{N,ij}$ marque un effacement de cycle dans le séquenceur $2_{ij}$ afin de réutiliser celui-ci plusieurs fois au cours de séquences principales ultérieures, comme illustré à la Fig. 2, ou, dans le cas contraire, les bornes $27_{N,ij}$ et $2F_{ij}$ sont reliées directement aux bornes $16_i+1$ et $1F$ respectivement afin que le séquenceur $2_{ij}$ soit utilisé une seule fois au cours du cycle principal.

Selon la Fig. 4, le marquage à "1" d'une sortie $Q_i$, $Q_j$ et donc d'une porte $5_i$, $5_j$ valide la fin d'un cycle de sous-séquences commandées par le séquenceur $2_{ij}$ et permet ainsi de poursuivre le cycle principal, puisque les états de toutes les sorties Q précédant la sortie marquée $Q_i$, $Q_j$ ne peuvent provoquer l'ouverture des portes ET correspondantes et donc modifier l'état "0" des bornes de sortie 17 correspondantes du séquenceur 1. Cette disposition permet d'exploiter à des fins de traitement logique la mémorisation des sous-séquences marquées globalement en $Q_i$, $Q_j$.

**Revendications**

1. Dispositif de séquencement comprenant un premier séquenceur (1) ayant plusieurs cellules ($10_1$ à $10_N$) pour commander des séquences d'un cycle ($1S_1$ à $1S_N$) en réponse à des commandes de déclenchement appliquées respectivement à des entrées ($16_1$ à $16_N$) des cellules, et des moyens logiques (1BM) pour réinitialiser toutes les cellules ($10_1$ à $10_N$) en réponse à un signal de fin de cycle (1F), chaque cellule ($10_i$) du séquenceur (1) comprenant des moyens logiques ($11_i$) pour enregistrer la commande de déclenchement respective jusqu'à la fin du cycle, et des moyens logiques ($12_i$, $13_i$, $14_i$, $18_i$) pour élaborer un ordre de début de la séquence respective fin de le presenter à une sortie ($17_i$) de la cellule ($10_i$) et d'arrêter toute séquence antérieure ($1S_1$ à $1S_{i-1}$) du cycle, en réponse à la commande de déclenchement enregistrée, caractérisé en ce que, dans chaque cellule ($10_i$), les moyens pour enregistrer comprennent une bascule bistable ($11_i$) ayant une entrée ($S_i$) recevant la commande de déclenchement respective ($16_i$) et une seconde entrée ($R_i$) reliée à une sortie des moyens pour réinitialiser (1BM), et les moyens pour élaborer comprennent une première diode ($14_i$) et une porte ET ($12_i$) ayant une première entrée reliée à une sortie ($Q_i$) de la bascule ($11_i$), une seconde entrée reliée à l'anode de la première diode ($14_i$) à travers un inverseur ($13_i$), et une sortie ($17_i$) reliée à la cathode de la première diode ($14_i$) et à l'anode de la première diode ($14_{i-1}$) dans la cellule de rang immédiatement inférieur ($10_{i-1}$) pour déclencher le début de la séquence respective ($1S_i$) et arrêter au moins l'une des séquences antérieures ($1S_1$ à

$1S_{i-1}$), les première et dernière cellules ($10_1$, $10_N$) déclenchant les première et dernière séquences ($1S_1$, $1S_N$) du cycle ne comprenant pas de diode et de porte ET respectivement.

2. Dispositif conforme à la revendication 1, caractérisé en ce que ladite cellule ($10_i$) comprend une seconde diode ($18_i$) ayant une diode reliée à la sortie ($17_i$) de la porte ET ($12_i$), et une cathode reliée à la cathode de la première diode ($14_i$).

3. Dispositif conforme à la revendication 1 ou 2, caractérisé en ce que chaque cellule ($10_i$) comprend une mémoire morte ($15_i$) contenant un mot (i) représentatif de la séquence respective ($1S_i$), ladite mémoire étant lue au début de la séquence déclenchée respective ($1S_i$) sous la commande des moyens pour élaborer ($12_i$, $13_i$, $14_i$).

4. Dispositif conforme à l'une quelconque des revendications 1 à 3, caractérisé en ce qu'il comprend au moins un second séquenceur ($2_{i+1}$) analogue au premier séquenceur (1) et comportant une première cellule ayant une entrée ($26_{1,i+1}$) reliée à la sortie ($17_{i+1}$) de l'une des cellules ($10_{i+1}$) du premier séquenceur (1), et une dernière cellule ayant une sortie ($27_{N,i+1}$) reliée à l'entrée ($16_{i+2}$) de l'une des cellules ($10_{i+2}$) déclenchables après la cellule précitée ($10_{i+1}$) dans le premier séquenceur, les moyens pour réinitialiser dans les séquenceurs (1, $2_{i+1}$) recevant simultanément le signal de fin de cycle (1F, $2F_{i+1}$).

5. Dispositif conforme à la revendication 4, caractérisé en ce qu'il comprend plusieurs séquenceurs (1, $2_{i+1}$, $2_i$) analogues au premier séquenceur (1) et reliés deux à deux d'une manière analogue aux premier et second séquenceurs (1, $2_{i+1}$).

6. Dispositif conforme à l'une quelconque des revendications 1 à 5, caractérisé en ce qu'il comprend plusieurs seconds séquenceurs ($2_{j+1}$, $2_{j+2}$, $2_{j+3}$) analogues au premier séquenceur (1) et des moyens pour sélectionner lesdits seconds séquenceurs, lesdits seconds séquenceurs comportant respectivement des premières cellules ayant des entrées ($26_{1,j+1}$, $26_{1,j+2}$, $26_{1,j+3}$) reliées respectivement à des sorties ($17_{j+1}$, $17_{j+2}$, $17_{j+3}$) de cellules du premier séquenceur (1) et des dernières cellules ayant des sorties ($27_{N,j+1}$, $27_{N,j+2}$, $27_{N,j+3}$) reliées à travers un circuit OU (3) à l'entrée ($16_{j+4}$) de l'une des cellules du premier séquenceur déclenchable après les cellules précitées du premier séquenceur, lesdits moyens pour sélectionner étant activés par l'une des sorties ($17_j$) du séquenceur principal précédant lesdites sorties ($17_{j+1}$, $17_{j+2}$, $17_{j+3}$) auxquelles sont reliés les entrées des premières cellules dans les seconds séquenceurs, pour sélectionner l'une desdites entrées précitées du premier séquenceur (1) en fonction de paramètres prédéterminés, les moyens pour réinitialiser dans les seconds séquenceurs recevant simultanément le signal de fin de cycle (1F, $2F_{j+1}$, $2F_{j+2}$, $2F_{j+3}$).

7. Dispositif conforme à l'une quelconque des revendications 1 à 6, caractérisé en ce qu'il comprend au moins un second séquenceur ($2_{ij}$) analogue au premier séquenceur (1) et comportant une première cellule ayant une entrée ($26_{1,ij}$) reliée à

des sorties ($17_i$, $17_j$) de plusieurs cellules du premier séquenceur (1) à travers un circuit OU (4), et une dernière cellule ayant une sortie ($27_{N,ij}$) reliée à une entrée ($2F_{ij}$) des moyens pour réinitialiser du second séquenceur, et plusieurs circuits ET ($5_i$, $5_j$) ayant des premières entrées reliées à la sortie ($27_{N,ij}$) de la dernière cellule du second séquenceur ($2_{ij}$), des secondes entrées reliées respectivement à des sorties ($Q_i$, $Q_j$) des moyens pour enregistrer ($11_i$, $11_j$) dans lesdites plusieurs cellules ($10_i$, $10_j$) du premier séquenceur, et des sorties reliées à des entrées ($16_{i+1}$, $16_{j+1}$) de cellules ($10_{i+1}$, $10_{j+1}$) du premier séquenceur déclenchables respectivement après lesdites plusieurs cellules ($10_i$, $10_j$).

## Patentansprüche

1. Schaltwerk mit einer ersten Schaltung mit mehreren Zellen ($10_1$—$10_N$), um die Signalfolgen eines Zyklus ($1S_1$—$1S_N$) als Antwort auf Auslösebefehle, die jeweils auf die Eingänge ($16_1$—$16_N$) des Zellen gegeben werden, abzusetzen, und mit logischen Einrichtungen (1BM) zum Zurücksetzen aller Zellen ($10_1$—$10_N$) als Antwort auf ein Zyklusendsignal (1F), wobei jede Zelle ($10_i$) der Schaltung (1) logische Einrichtungen ($11_i$) zur Speicherung des jeweiligen Auslösesignals bis zum Zyklusende und logische Einrichtungen ($12_i$, $13_i$, $14_i$, $15_i$) zum Aufstellen einer Startordnung der jeweiligen Sequenz, um diese als Antwort auf den gespeicherten Auslösebefehl auf einen Ausgang ($17_i$) de Zelle ($10_i$) zu geben und die ganze vorhergehende Zyklusfolge ($1S_1$—$1S_{i-1}$) zu stoppen, aufweist, dadurch gekennzeichnet, daß in jeder Zelle ($10_i$) die Speichereinrichtungen eine bistabile Kippstufe ($11_i$) mit einem Eingang ($S_i$), der den jeweiligen Auslösebefehl ($16_i$) erhält, und mit einem mit dem Ausgang der Rücksetzeinrichtung (1BM) verbundenen zweiten Eingang ($R_i$) umfassen und daß die Verarbeitungseinrichtungen eine erste Diode ($14_i$) und eine Torschaltung ET ($12_i$), die einen ersten Eingang, der mit einem Ausgang ($Q_i$) der Kippstufe ($11_i$) verbunden ist, einen zweiten Eingang, der mit der Anode der ersten Diode ($14_i$) über einen Inverter ($13_i$) verbunden ist, und einen Ausgang ($17_i$), der mit der Kathode der ersten Diode ($14_i$) und der Anode der ersten Diode ($14_{i-1}$) in der in der Reihenfolge unmittelbar vorangehenden Zelle ($10_{i-1}$) verbunden ist, um den Start der jeweiligen Sequenz ($1S_i$) auszulösen und mindestens eine der vorhergehenden Sequenzen ($1S_1$—$1S_{i-1}$) zu stoppen, aufweisen, wobei die erste und die letzte Zelle ($10_1$, $10_N$), die die erste und letzte Sequenz ($1S_1$, $1S_N$) des Zyklus auslösen, jeweils keine Diode und keine Torschaltung ET aufweisen.

2. Schaltwerk nach Anspruch 1, dadurch gekennzeichnet, daß die Zelle ($10_i$) eine zweite Diode ($18_i$) mit einer Anode, die mit dem Ausgang ($17_i$) der Torschaltung ET ($12_i$) verbunden ist, und einer Kathode, die mit der Kathode der ersten Diode ($14_i$) verbunden ist, aufweist.

3. Schaltwerk nach Anspruch 1 oder 2, dadurch gekennzeichnet, daß jede Zelle ($10_i$) einen stati-

schen Speicher ($15_i$) aufweist, der ein Wort (i) enthält, das die jeweilige Sequenz ($1S_i$) darstellt, wobei der Speicher am Anfang der jeweils ausgelösten Sequenz ($1S_i$) gesteuert durch die Verarbeitungseinrichtungen ($12_i$, $13_i$, $14_i$) ausgelesen wird.

4. Schaltwerk nach einem der Ansprüche 1 bis 3, dadurch gekennzeichnet, daß es mindestens eine zweite der ersten Schaltung (1) analoge Schaltung ($2_{i+1}$) aufweist, die aus einer ersten Zelle mit einem Eingang ($26_{1,i+1}$), der mit dem Ausgang ($17_{i+1}$) der einen Zelle ($10_{i+1}$) der ersten Schaltung (1) verbunden ist, und aus einer letzten Zelle mit einem Ausgang ($27_{N,i+1}$), der mit dem Eingang ($16_{i+2}$) einer der Zellen ($10_{i+2}$) in der ersten Schaltung, die nach der vorerwähnten Zelle ($10_{i+1}$) auslösbar sind, verbunden ist, besteht, wobei die Rücksetzeinrichtungen in den Schaltungen (1, $2_{i+1}$) gleichzeitig das Zyklusendsignal (1F, $2F_{i+1}$) erhalten.

5. Schaltwerk nach Anspruch 4, dadurch gekennzeichnet, daß es mehrere Schaltungen (1, $2_{i+1}$, $2_i$) aufweist, die der ersten Schaltung (1) entsprechen und die paarweise auf eine ähnliche Weise wie die erste und zweite Schaltung (1, $2_{i+1}$) miteinander verbunden sind.

6. Schaltwerk nach einem der Ansprüche 1 bis 5, dadurch gekennzeichnet, daß es mehrere zweite Schaltungen ($2_{j+1}$, $2_{j+2}$, $2_{j+3}$), die der ersten Schaltung (1) entsprechen, und Einrichtungen zur Auswahl dieser zweiten Schaltung, aufweist, wobei die zweiten Schaltungen jeweils aus ersten Zellen mit Eingängen ($26_{1,j+1}$, $26_{1,j+2}$, $26_{1,j+3}$), die jeweils mit den Ausgängen ($17_{j+1}$, $17_{j+2}$, $17_{j+3}$) der Zellen der ersten Schaltung (1) verbunden sind, und aus letzten Zellen mit Ausgängen ($27_{N,j+1}$, $27_{N,j+2}$, $27_{N,j+3}$), die über einen Schaltkreis OU (3) mit dem Eingang ($16_{j+4}$) einer der Zellen der ersten Schaltung, die nach den vorerwähnten Zellen der ersten Schaltung auslösbar sind, bestehen, und die Auswahleinrichtungen durch einen der Ausgänge ($17_j$) der Hauptschaltung, die den Ausgängen ($17_{j+1}$, $17_{j+2}$, $17_{j+3}$), mit denen die Eingänge der ersten Zellen in der zweiten Schaltung verbunden sind, vorangeht, aktiviert werden, um einen der vorerwähnten Eingänge der ersten Schaltung (1) als Funktion vorbestimmter Parameter auszuwählen, und die Rücksetzeinrichtungen in der zweiten Schaltung das Zyklusendesignal (1F, $2F_{j+1}$, $2F_{j+2}$, $2F_{j+3}$) gleichzeitig erhalten.

7. Schaltwerk nach einem der Ansprüche 1 bis 6, dadurch gekennzeichnet, daß es mindestens eine zweite Schaltung ($2_{ij}$) aufweist, die der ersten Schaltung (1) entspricht und die aus einer ersten Zelle mit einem Eingang ($26_{1,ij}$), der mit den Ausgängen ($17_i$, $17_j$) verschiedener Zellen der ersten Schaltung (1) über einen Schaltkreis OU (4) verbunden ist, und aus einer letzten Zelle mit einem Ausgang ($27_{N,ij}$), der mit einem Eingang ($2F_{ij}$) der Rückstelleinrichtungen der zweiten Schaltung verbunden ist, und aus mehreren Schaltkreisen ET ($5_i$, $5_j$) mit ersten Eingängen, die mit dem Ausgang ($27_{N,ij}$) der letzten Zelle der zweiten Schaltung ($2_{ij}$) verbunden sind, mit zweiten Eingängen, die jeweils mit den Ausgängen

($Q_i$, $Q_j$) der Speichereinrichtungen ($11_i$, $11_j$) in den verschiedenen Zellen ($10_i$, $10_j$) der ersten Schaltung verbunden sind, und mit Ausgängen, die mit den Eingängen ($16_{i+1}$, $16_{j+1}$) der Zellen ($10_{i+1}$, $10_{j+1}$) der ersten Schaltung verbunden sind, die jeweils nach den verschiedenen Zellen ($10_i$, $10_j$) auslösbar sind, besteht.

## Claims

1. A sequencing device comprising a first sequencer (1) having a number of cells ($10_1$ to $10_N$) for controlling the sequences of a cycle ($1S_1$ to $1S_N$) in response to activation commands respectively applied to cell inputs ($16_1$ to $16_N$), and logic means (1BM) for resetting all the cells ($10_1$ to $10_N$) in response to an end of cycle signal (1F), each cell ($10_i$) of the sequencer (1) comprising logic means ($11_i$) for recording the respective activation command up to the end of the cycle, and logic means ($12_i$, $13_i$, $14_i$, $18_i$) for formulating an order to begin the respective sequence in order to present it to an output ($17_i$) of the cell ($10_i$) and to stop any previous sequence ($1S_1$ to $1S_{i-1}$) of the cycle, in response to the recorded activation command, characterised in that, in each cell ($10_i$), the recording means comprise a bistable trigger circuit ($11_i$) having an input ($S_i$) receiving the respective activation command ($16_i$) and a second input ($R_i$) connected to an output of the resetting means (1BM), and the formulating means comprise a first diode ($14_i$) and an AND gate ($12_i$) having a first input connected to an output ($Q_i$) of the trigger circuit ($11_i$), a second input connected to the anode of the first diode ($14_i$) via a changeover switch ($13_i$), and an output ($17_i$) connected to the cathode of the first diode ($14_i$) and to the anode of the first diode ($14_{i-1}$) in the cell of immediately lower rank ($10_{i-1}$) in order to activate the beginning of the respective sequence ($1S_i$) and stop at least one of the previous sequences ($1S_1$ to $1S_{i-1}$), and the first and last cells ($10_1$, $10_N$) activating the first and last sequences ($1S_1$, $1S_N$) of the cycle are respectively without a diode and an AND gate.

2. A device according to claim 1, characterised in that the cell ($10_i$) comprises a second diode ($18_i$) having an anode connected to the output ($17_i$) of the AND gate ($12_i$), and a cathode connected to the cathode of the first diode ($14_i$).

3. A device according to claim 1 or 2, characterised in that each cell ($10_i$) comprises an ROM ($15_i$) containing a word (i) representing the respective sequence ($1S_i$), the memory being read at the beginning of the respective activated sequence ($1S_i$) under the control of the formulating means ($12_i$, $13_i$, $14_i$).

4. A device according to any of claims 1 to 3, characterised in that it comprises at least one second sequencer ($2_{i+1}$) similar to the first sequencer (1) and comprising a first cell having an input ($26_{1,i+1}$) connected to the output ($17_{i+1}$) of one of the cells ($10_{i+1}$) of the first sequencer (1), and a last cell having an output ($27_{N,i+1}$) connected to the input ($16_{i+2}$) of one of the cells ($10_{i+2}$) for activating after the aforementioned cell ($10_{i+1}$) in the first sequencer, the end of cycle signal (1F, $2F_{i+1}$) being simultaneously received by the resetting means in the sequencers (1, $2_{i+1}$).

5. A device according to claim 4, characterised in that it comprises a number of sequencers (1, $2_{i+1}$, $2_i$) similar to the first sequencer (1) and connected two by two in similar manner to the first and second sequencer (1, $2_{i+1}$).

6. A device according to any of claims 1 to 5, characterised in that it comprises a number of second sequencers ($2_{j+1}$, $2_{j+2}$, $2_{j+3}$) similar to the first sequencer (1) and means for selecting the second sequencers, the second sequencers respectively comprising first cells having inputs ($26_{1,j+1}$, $26_{1,j+2}$, $26_{1,j+3}$) respectively connected to outputs ($17_{j+1}$, $17_{j+2}$, $17_{j+3}$) of the cells of the first sequencer (1) and last cells having outputs ($27_{N,j+1}$, $27_{N,j+2}$, $27_{N,j+3}$) connected via an OR circuit (3) to the input ($16_{j+4}$) of one of the cells in the first sequencer to be activated after the aforementioned cells in the first sequencer, the selection means being actuated by one of the outputs ($17_j$) of the main sequencer preceding the aforementioned outputs ($17_{j+1}$, $17_{j+2}$, $17_{j+3}$), to which the inputs of the first cells in the first sequencers are connected, so as to select one of the aforementioned inputs of the first sequencer (1) in dependence on preset parameters, the end of cycle signal (1F, $2F_{j+1}$, $2F_{j+2}$, $2F_{j+3}$) being simultaneously received by the resetting means in the second sequencers.

7. A device according to any of claims 1 to 6, characterised in that it comprises at least one second sequencer ($2_{ij}$) similar to the first sequencer (1) and comprising a first cell having an input ($26_{1,ij}$) connected to outputs ($17_i$, $17_j$) of the first cells of the first sequencer (1) via an OR circuit (4) and a last cell having an output ($27_{N,ij}$) connected to an input ($2F_{ij}$) of the means for resetting the second sequencer, and a number of AND circuits ($5_i$, $5_j$) having first inputs connected to the output ($27_{N,ij}$) of the first cell of the second sequencer ($2_{ij}$), second inputs respectively connected to outputs ($Q_i$, $Q_j$) of the recording means ($11_i$, $11_j$) in the aforementioned cells ($10_i$, $10_j$) of the first sequencer, and outputs connected to the inputs ($16_{i+1}$, $16_{j+1}$) of cells ($10_{i+1}$, $10_{j+1}$) of the first sequencer for respectively activating after the aforementioned cells ($10_i$, $10_j$).

FIG.1

SEQUENCEUR 1

EP 0 218 527 B1

# FIG.2

EP 0 218 527 B1

FIG.3

SEQUENCEUR PRINCIPAL

SEQUENCEUR AUXILIAIRE 1

SEQUENCEUR AUXILIAIRE 2

SEQUENCEUR AUXILIAIRE 3

# FIG.4